# Europäisches Patentamt
# European Patent Office
# Office européen des brevets

(19)

(11) Publication number: **0 269 137**
**B1**

(12) **EUROPEAN PATENT SPECIFICATION**

(45) Date of publication of the patent specification:
**19.09.90**

(51) Int. Cl.⁵: **F16C 33/80**

(21) Application number: **87201885.8**

(22) Date of filing: **02.10.87**

(54) A low friction projection screening for rolling bearings.

(30) Priority: **13.11.86 IT 5407786 U**

(43) Date of publication of application:
**01.06.88 Bulletin 88/22**

(45) Publication of the grant of the patent:
**19.09.90 Bulletin 90/38**

(84) Designated Contracting States:
**DE FR GB SE**

(56) References cited:
**EP-A- 0 021 734**
**DE-U- 6 915 507**
**FR-A- 1 416 225**
**GB-A- 1 140 208**

(73) Proprietor: **RIV-SKF OFFICINE DI VILLAR PEROSA S.p.A, Via Mazzini 53, I-10123 Torino(IT)**

(72) Inventor: **Bermond, Gabriele, Viale Rimembranza 60, Pinerolo (TO)(IT)**
Inventor: **Vignotto, Angelo, Via Montevideo 6, Torino(IT)**

(74) Representative: **Lotti, Giorgio, c/o Ing. Barzanò & Zanardo Milano S.p.A. Via Cernaia 20, I-10122 Torino(IT)**

ACTORUM AG

## Description

This invention relates to a protection screening for rolling bearings as defined in the preamble of the claim.

Document FR-A 1 416 225 discloses a low friction protection screening for rolling bearings of this type whereby the inner surface of the race of the bearing, with which the screens form a labyrinth seal, is provided with recesses along the portions in which said seals are formed thus providing pockets between the surface of the race and the surface of the screen disposed facing it.

This screening however provides an intergaging portion on the screen surface thus requiring lower tollerances and hence resulting in high manufacturing costs and not easy installation.

The object of the invention is to overcome the above deficiencies providing a particularly efficient screening which results in reduced manufacturing costs and more reliable installation.

For attaining these objects the invention proposes a screening as defined in the claim.

The subject-matter of the invention will now be described with reference to the annexed drawing which partially illustrates in a sectional view a rolling bearing provided with a screening according to the invention.

A rolling bearing of a known type has an outer race 10, an inner race 11, balls 12, a cage 13 and screens 14 made of a composition of elastomeric or plastic materials 15 and plate 16.

According to the invention, a recess 19 is formed in the portion of surface 17 facing the lip 18 of the screen 14 which forms the seal; the recess 19 must be completely covered by the lip 18.

The purpose of said recess is to provide a pocket intended to contain and retain both the foreign bodies which could penetrate through the seald 17-18, and the grease contained within the interior of the bearing and which tends to come out yet through the seal 17-18 during operation of the bearing itself.

In view of the fact that no intergaging portion is provided on the lip surface and on the surface 17 facing the lip 18, higher tolerances are permitted, resulting in reduced manufacturing cost and more reliable installation.

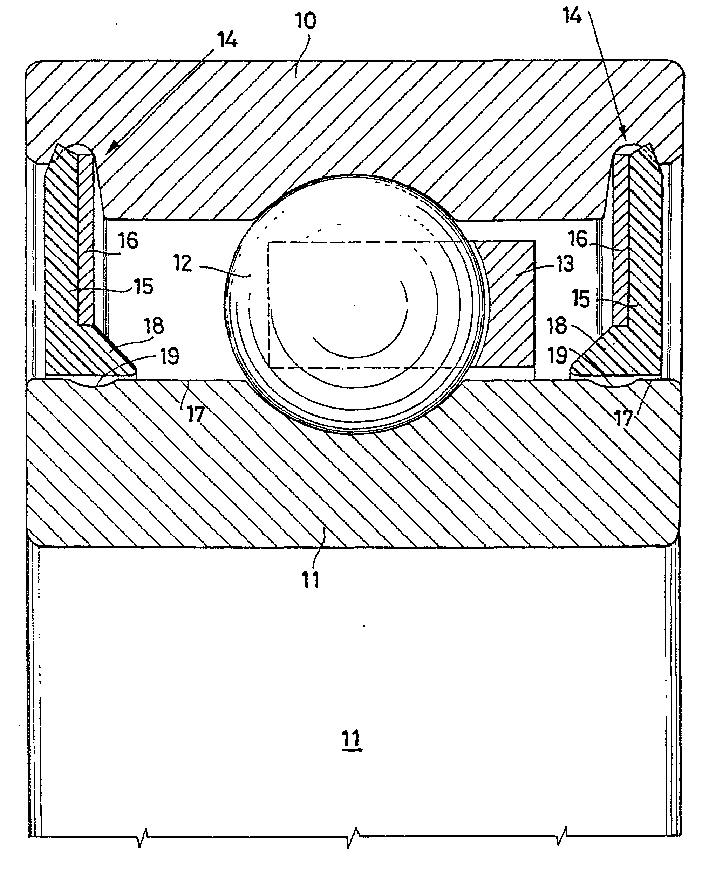

## Claim

A low friction protection screening for rolling bearings, comprising at least one screen (14) carried by one of the races (10) of the bearing and having a lip (18) positioned adjacent a surface (17) of the other race (11) to form a labyrinth seal, said surface (17) being provided with a recess (19) along the portion in which said seal is formed, the surface of the lip (18) completely covering the recess (19) in the axial direction in the recess 19 no portion intergaging is provided on the lip surface (18) whereby there is provided a pocket between the surface (17) of the race (11) and the lip (18) of the screen (14).

## Patentanspruch

Schutzelement mit geringer Reibwirkung für Wälzlager mit mindestens einem von einer der Laufbahnen (10) des Lagers gestützten Schutz (14) und mit einem Rand (18) in der Nähe einer Oberfläche (17) der anderen Laufbahn (11), sodaß eine Labyrinthdichtung entsteht, besagte Oberfläche (17) enthält eine Aussparung (19) längs des Teils, wo sich besagte Dichtung befindet, die Oberfläche des Randes (18) verdeckt die Aussparung (19) in axialer Richtung vollständig, dadurch gekennzeichnet daß es auf der Oberfläche des Randes (18) keine Überlappungen mit der Aussparung (19) gibt, wo sich eine Vertiefung zwischen der Oberfläche (17) der Laufbahn (11) und dem Rand (18) des Schutzelementes (14) befindet.

## Revendication

Elément de protection à bas frottement pour paliers à roulement comprenant au moins une protection (14) soutenue par une des pistes (10) du palier et ayant un bord (18) proche d'une surface (17) de l'autre piste (11) de façon à former une étanchéité à labyrinthe; la surface susdite (17) présente un renfoncement (19) le long de la partie où l'étanchéité susdite est réalisée; la surface du bord (18) couvre complètement le renfoncement (19) dans la direction axiale; caractérisé du fait que sur la surface du bord (18) il n'y a aucune superposition avec le renfoncement (19) où on a une cavité entre la surface (17) de la piste (11) et le bord (18) de la protection (14).